Europäisches Patentamt

European Patent Office

Office européen des brevets

(19)

(11) Publication number: **0 282 149**
**A2**

# (12) EUROPEAN PATENT APPLICATION

(21) Application number: **88300485.5**

(22) Date of filing: **21.01.88**

(51) Int. Cl.⁴: **H04Q 11/04 , H04Q 3/545**

(30) Priority: **13.03.87 CA 532065**

(43) Date of publication of application:
**14.09.88 Bulletin 88/37**

(84) Designated Contracting States:
**AT DE FR GB NL SE**

(71) Applicant: **NORTHERN TELECOM LIMITED**
**600 de la Gauchetiere Street West**
**Montreal Quebec H3B 4N7(CA)**

(72) Inventor: **Champagne, Claude Jean**
**331 Thomas Street**
**Carleton Place Ontario, K7C 3J8(CA)**

(74) Representative: **Crawford, Andrew Birkby et al**
**A.A. THORNTON & CO. Northumberland**
**House 303-306 High Holborn**
**London WC1V 7LE(GB)**

(54) **A system for maintaining the hardware-software compatibility of modular communication system.**

(57) In a communication system having a processor unit (10) and a plurality of types of modules (12) each one located at a respective addressable location accessible by the processor unit (10), each module is provided with a respective memory means (14) containing data representing the compatibility status of the module relative to the processor unit. The data comprises a base indicia indicating the backward compatibility level of the module relative to the software of the processing unit (10) and a current indicia indicating the present compatibility level of the module relative to the software of the processing unit.

FIG. I

EP 0 282 149 A2

# A SYSTEM FOR MAINTAINING THE HARDWARE-SOFTWARE COMPATIBILITY OF MODULAR COMMUNICATION SYSTEMS

The invention relates generally to telecommunication systems and more particularly to a method of ensuring the compatibility integrity of the modules in such a system.

The contemporary telephone switching systems usually comprise a central control unit having a processor and a large number of printed circuit boards or modules. The operation of the system is directed by software stored in the central control unit In order to maintain the integrity of such systems, it is known to provide the modules with circuitry for generating self-identifying type-code information which is retrievable on request by the central processing unit of the system. The received information is compared with the type-code information contained in the data memory of the central control unit and upon non-correlation between received information and the stored type-code information, an alarm signal or flag is generated. An example of such a modular communication system having self-identifying modules is described in United States patent No. 4,138,599 issued to the same assignee as that of the present application.

Although the invention described in the above-identified patent has been found to be very effective for its intended purpose, it has been found not to be adequate under some circumstances. In view of the high cost of switching systems, they tend to be designed in such a way that provision is made for future evolution so that their performance capability and set of features may be enhanced in the future as the desirability of performing these functions becomes reality. These enhancements may usually be obtained by enhancing the software of the central control unit. In some cases, the modules' interface circuitry is designed to accept future changes in the software whereas, in other cases, the provision of new performance enhancements and features necessitates a change in the hardware of the module.

In all cases where a system performance is enhanced either through software or hardware, it is necessary that the compatibility between the software package of the system and the modules be maintained. It is also desirable that the number of product engineering codes for identifying modules remain at a minimum. Otherwise, the inventory of modules would proliferate with every performance and/or feature set enhancement. Oftentimes such enhancements are the result of a new software release and do not require any hardware changes to the modules. Keeping track of the compatibility between the software releases of a system with the modules of that system has been found to be a horrendous task fraught with traps leading to errors and serious problems.

## Summary of the Invention

It has been found that the above-described problem may be alleviated to a large extent by providing every module with a programmable read only memory containing data representing the compatibility status of the module. The latter comprises a base indicia indicating the backward compatibility level of the module with the software of the central control unit and a current indicia indicating the present compatibility level of the module with the software release of the central control unit. The read only memory may also contain the type-code or product engineering code identity of the module.

The memory content of any one module is addressable by the central control unit which may then compare it with its own compatibility data relative to that module. The invention thus provides not only a means of verifying whether or not a particular addressable location contains a module having the correct product engineering code but also whether or not that module is fully compatible with the software release of the central processing unit. By having a base indicia and a current indicia, the memory information represents a window of hardware/software compatibility for the module. The memory means of the respective modules is a programmable read only memory thereby to allow its contents to be updated when necessary.

## Description of the Drawings

An example embodiment of the invention will now be described in conjunction with the drawings in which:

Figure 1 is a block circuit diagram of a system in accordance with the invention; and

Figure 2 is a representation of the memory contents in each of the modules illustrated in figure 1.

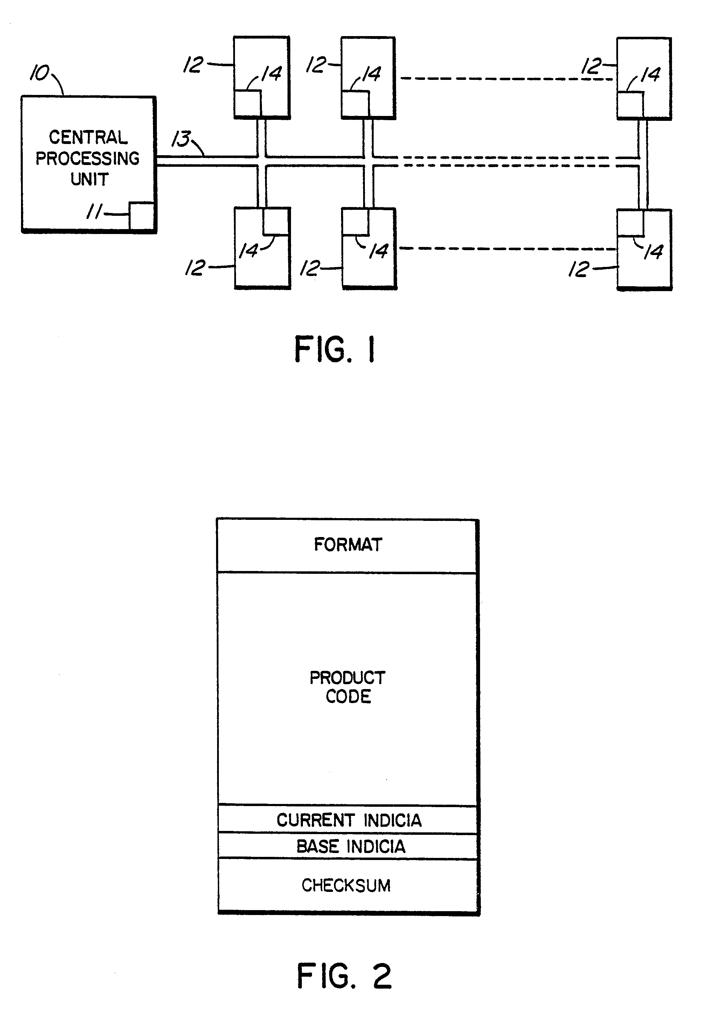

Figure 1 shows a central processing unit 10 having a data memory 11 and being connected to a plurality of modules 12 via a common data bus 13. Each of the modules 12 is shown to comprise a programmable read only memory 14. Each of the modules 12 usually comprise a printed circuit board having a plurality of components mounted thereon for providing predetermined functions. Each module is addressable by the central processing unit on the bus 13 for transferring the content of the respective memories 14 thereto.

Figure 2 illustrates a typical distribution of the information contained in the memory 14 of each module 12. The memory may conveniently be partitioned as n lines, each line containing one 8-bit byte of data. The FORMAT section of the memory identifies the particular format of the data in the remainder of the memory. If the format of the data is ever changed, the modified format may simply be identified with a new label recognizable by the central processing unit of the system.

The next section of data in the memory is the product engineering code of the module and it corresponds to a type-code identification number usually allocated at the factory and which does not change throughout the life of the product. The code may be an alphanumeric sequence which may conveniently be stored as ASCII code.

The following byte of memory is the current indicia of compatibility for indicating the present compatibility level of the module with the software of the central control unit. This is followed by the base indicia which indicates the backward compatibility level of the module with the software of the central control unit. Each of these indicia may be coded with a byte of data using hexadecimal numbers so that each indicia may be incremented as follows: 01, 02,......0F, 10,......FF.

The last portion of memory is a sixteen bit checksum code which when added to the checksum of the remainder of the memory equals a predetermined hexadecimal number such as 1D0F. This is, of course, a well known technique for verifying that the contents of the memory have been read out correctly.

The invention will become clearer on an understanding reading of the following characteristics of the indicia as well as the rules for maintaining the compatibility relationships between the central processing unit software and the modules.

As mentioned above, the base indicia of a module is used to indicate its backward compatibility with the software vintage of the central processing unit and the current indicia indicates the present compatibility level of the module with the software of the central processing unit. At the initial release of a module, the base indicia (B) is equal to the current indicia (C). C is incremented every time that a hardware change is released that affects the definition of the module's software interface. It is possible to change the hardware of a module without incrementing B if the changes are compatible with the module's previous vintage software interface. On the other hand, B is incremented when a hardware change is made that is not compatible with previous vintages of software interface.

When a hardware change of a module renders its software interface incompatible with the existing software of the system, B is incremented upwards to a value of vintage that is compatible with the existing software. All hardware vintages of a module between and including the base and current vintages must be compatible with existing software of the machine. If only the latest vintage is to be supported by the module then its B indicia must equal its C indicia.

The following chart illustrates an example evolution of a module:

| B | C | |
|---|---|---|
| 01 | 01 | initial release of module,  B = C |
| 01 | 02 | backward compatible change no. 1 |
| 01 | 03 | backward compatible change no. 2 |
| 01 | 04 | backward compatible change no. 3 |
| 05 | 05 | non-backward compatible change B = C |
| 05 | 06 | backward compatible change |

It may be observed from the chart that the base indicia always chases the current indicia therefore providing a window of compatibility for the module. It may also be observed that any pair (B,C) of indicia locates a module at an exact point in the evolution history of that module and provides an exact description of its compatibility capability in the system. When a module's design is modified by the manufacturer, the module is regressively tested to determine its compatibility level and its base and indicia are corrected correspondingly as is the checksum portion of the memory.

In order for a central processing unit to be able to determine if a module is compatible with its software interface, it must carry a pair of indicia (S,L) for cross-referencing with the B and C indicia of a particular module. The S indicia indicates the software interface vintage relative to a particular module and the L indicia indicates the lowest possible hardware-software vintage supported by the system software. In determining the correlation between the system indicia (S,L) with a module indicia (B,C) the following relationships must be maintained. The hardware of a module is compatible with the system software if $L \leq B \leq S$. Also, the hardware of a module is not compatible with the system software if $S < B$, and for the software to be able to run all the features available $S \geq C$. Under all circumstances, $B \leq C$.

Since the identification PROM on each module contains data representing its compatibility status, a central processing unit is immediately able to determine if a module, regardless of its age, is compatible with its software package by comparing the compatibility indicia of the module with its own indicia.

## Claims

1. A communication system having a central processing unit (10) and a plurality of types of modules (12) each one being located at a respective addressable location accessible by the central processing unit (10), the latter having data storage means containing hardware and software compatibility information associated with each module (12) of the system, each module (12) of the system having a respective memory means (14) containing data representing the compatibility status thereof, the data comprising, a base indicia indicating the backward compatibility level of the module relative to the software of the central processor unit (10) and a current indicia indicating the present compatibility level of the module relative to the software of the central processor unit.

2. A system as defined in claim 1 wherein the base indicia is at a level equal to or greater than the lowest hardware-software vintage supported by the central processing unit software and is equal to or less than the software interface vintage associated with the module.

3. A system as defined in claim 2 wherein the current indicia is equal to or less than the software interface vintage associated with the module.

4. A system as defined in claim 3 wherein the base indicia is less than or equal to the current indicia.

5. A system as defined in claim 4 wherein the memory means is a programmable read only memory.

6. A system as defined in claim 5 wherein the memory further comprises information identifying the product engineering code of the module.

7. A system as defined in claim 6 wherein the memory further comprises a checksum of the information contained in the memory whereby the correctness of the data read from the memory may be verified.

FIG. 1

FIG. 2